# EUROPEAN PATENT APPLICATION

(11) **EP 4 708 881 A1**
(43) Date of publication of application: **11.03.2026**
(21) Application number: 25163442.4
(22) Date of filing: 13.03.2025
(51) Int. Cl.: H04N 21/258, H04M 15/00, H04N 21/43, H04N 21/433, H04N 21/436, H04N 21/441, H04N 21/45, H04N 21/475, H04N 21/462

(54) **DISPLAY DEVICE INTERFACING SERVER**

(30) Priority: 09.09.2024 KR 20240122529
(71) Applicant: LG Electronics Inc., Yeongdeungpo-gu Seoul 07336 (KR)
(72) Inventor: JANG, Kwanghee, 07796 Seoul (KR); KIM, Younghyun, 07796 Seoul (KR)
(74) Representative: Vossius & Partner Patentanwälte Rechtsanwälte mbB

(57) **Abstract**

The display device includes a user input interface that receives, from a remote control device, a request for a login with a particular account for viewing content; a processor that obtains screen information for viewing the content based on the request for the login with the particular account; and a display configured to display a particular screen according to the obtained screen information during the login with the particular account. When a login is attempted for a first time, the processor may receive an interface response indicating that interfacing with a particular content server has been successfully established through the login using a created virtual account, by interfacing with the control server.

## Description

### TECHNICAL FIELD

The present disclosure relates to a display device configured to interface with a server. More particularly, the present disclosure relates to a display device configured to interface with a content server using a virtual account.

### BACKGROUND

Recently, digital TV services using wired or wireless communication networks have become widespread. The digital TV services may provide various services that were not available in existing analog broadcasting services.

For example, Internet protocol television (IPTV) and Smart TV service, which are types of digital TV services, provide interactivity for allowing users to actively select a type, viewing time, or the like of programs watched by the users.

Based on this interactivity, the IPTV and Smart TV services may also provide various additional services such as Internet search, home shopping, and online gaming, etc. As such, a variety of content is being produced and supplied recently. Therefore, information about types of content being played on a display device via which a user is viewing may be identified. Additionally, the importance of content recommendation services capable of recommending content by identifying content preferred on the display device via which the user is viewing is growing.

Meanwhile, application programs that allow individual content purchases have an issue such that new membership registration on each content provider is needed. To address this issue, there is a need to support a function that allows to purchase and play individual content without membership registration on a server separately operated by a content provider. For example, there is a need to support a function that allows to purchase and play individual content through an account of a manufacturer of a display device without membership registration on a server separately operated by a content provider.

### SUMMARY

Therefore, the present disclosure is directed to solving the aforementioned problems and other drawbacks, and provides a display device that interfaces with a content server using a virtual account.

The present disclosure is to support a function that allows to purchase and play individual content without membership registration on a server separately operated by a content provider.

The present disclosure is to create a virtual account not to provide information about an account of a manufacturer of a display device.

The present disclosure is to support a function that allows to purchase and play individual content through an account of a manufacturer of a display device without membership registration on a server operated separately by a content provider.

The present disclosure is to provide implementation such that content may be purchased and played using interface information about a virtual account and an account of a manufacturer of a display device without an additional membership registration procedure.

In order to achieve these and other advantages and in accordance with the purpose of this specification, as embodied and broadly described herein, there is provided a display device configured to interface with a server, the display device including a user input interface that receives, from a remote control device, a request for a login with a particular account for viewing content; a processor that obtains screen information for viewing the content based on the request for the login with the particular account; and a display configured to display a particular screen according to the obtained screen information during the login with the particular account. When a login is attempted for first time using login information about the login, the processor may receive an interface response indicating that interfacing with a particular content server has been successfully established through the login using a created virtual account, by interfacing with the control server.

According to an embodiment, the processor may transmit the login information to an application program that interfaces with a control server, control the application program to attempt a login with the particular account by interfacing with the control server based on the login information, determine whether the login is attempted for first time using the login information, by interfacing with the control server, and when the login is attempted for the first time using the login information, receive an interface response indicating that interfacing with a particular content server has been successfully established through the login using a created virtual account, by interfacing with the control server.

According to an embodiment, when a login was attempted previously using the login information, the processor may obtain a virtual account corresponding to information about the previous login from the control server by interfacing with the control server. The processor may receive an interface response indicating that interfacing with the particular content server has been successfully established using the obtained virtual account, by interfacing with the control server.

According to an embodiment, the processor may create a first account corresponding to the virtual account by interfacing with a first content server, in correspondence with a first execution input to a first icon on the display. The processor may create a second account corresponding to the virtual account by interfacing with a second content server, in correspondence with a second execution input to a second icon on the display.

According to an embodiment, the processor may receive, through the control server, a first notification indicating that a first service account has been created or a second notification indicating that a second service account has been created. The first service account may be created through a first application program corresponding to the first content server. The second service account may be created through a second application program corresponding to the second content server. The first service account and the second service account may be accounts of a same person as the virtual account.

According to an embodiment, the processor may transmit a first request requesting to integrate the first service account or the second service account into the virtual account to a mobile terminal that has requested the creating of the first service account through the control server. The processor may transmit, to the mobile terminal, a message indicating that integrated management of a plurality of services is available through the virtual account, when the first service account or the second service account is integrated into the virtual account. The processor may transmit control the control server to integrate the first service account or the second service account into the virtual account, when a first response accepting the first request is received from the mobile terminal.

According to an embodiment, the processor may determine whether the first service account or the second service account of a same person as the created virtual account is present, when the login is attempted for the first time using the login information. The processor may determine whether the first service account or the second service account of a same person as the obtained virtual account is present, when a login was attempted previously using the login information. The processor may display, on the display, a second request requesting to integrate the first service account or the second service account into the virtual account, when the first service account or the second service account of the same person is present.

According to an embodiment, the processor may display, on the display, a message indicating that integrated management of a plurality of services is available through the virtual account, when the first account or the second account is integrated into the virtual account. The processor may control the control server to integrate the first service account into the first account, when a second response accepting the second request is received from the display or a remote control device wirelessly connected to the display device.

According to an embodiment, the processor may determine whether first usage time of the first service through the first account exceeds first threshold time. The processor may determine whether second usage time of a second service through the second account exceeds second threshold time. The processor may transmit information about usage time of the first service and the second service to the control server, when the first usage time exceeds the first threshold time and the second usage time exceeds the second threshold time. The processor may displays, on the display, a subscription request message for an integrated subscription service for the first service and the second service by interfacing with the control server.

According to an embodiment, when a relationship between a first user and a second user among a plurality of users is set as a family, the processor may control the control server to map a first login account of the first user and a second login account of the second user to a same virtual account. The processor may control the control server to map the second login account to a second virtual account, when the first login account is in a logged-out state and the second login account is in a logged-in state, the first login account being a representative account among login accounts including the first login account and the second login account.

According to an embodiment, in a state of being mapped to the same virtual account, when a login is performed with the second login account that was previously logged in, the processor may obtain the virtual account from the control server. When the first login account is in a logged-out state and a login is made first with the second login account, the processor may create a second virtual account and receive an interface response indicating that interfacing with a particular content server has been successfully established through a login with the created second virtual account, by interfacing with the control server.

According to an embodiment, the processor may determine whether a sum of first usage time of a first service from the first content server through the first login account and the second login account exceeds first threshold time. The processor may determine whether a sum of second usage time of a second service through the first login account and the second login account exceeds second threshold time.

According to an embodiment, the processor may transmit, to the control server, an integrated subscription request message with respect to the first service for the first user and the second user when the sum of the first usage time exceeds the first threshold time. The processor may transmit, to the control server, an integrated subscription request message with respect to the second service for the first user and the second user when the sum of the second usage time exceeds the second threshold time. The processor may transmit, to the control server, an integrated subscription request message with respect to the first service and the second service for the first user and the second user, when the sum of the first usage time exceeds the first threshold time and the sum of the second usage time exceeds the second threshold time.

According to this specification, a display device configured to interface with a content server using a newly created or previously created virtual account may be provided.

According to this specification, a function that allows to purchase and play individual content without membership registration on a server operated separately by a content provider may be supported through a newly created or existing virtual account.

According to this specification, a virtual account may be newly created or an existing virtual account may be used not to provide information about an account of a manufacturer of a display device.

According to this specification, a function that allows to purchase and play individual content through an account of a manufacturer of a display device without membership registration on a server operated separately by a content provider may be supported through a newly created or existing virtual account.

According to this specification, implementation may be performed such that content may be purchased and played through a newly created or existing virtual account using interface information about a virtual account and an account of a manufacturer of a display device without an additional membership registration procedure.

According to this specification, when a login is attempted for first time, an interface response indicating that interfacing with a particular content server has been successfully established through login with a created virtual account may be received.

According to this specification, content may be viewed by interfacing with a plurality of content servers through a control server using a virtual account corresponding to previous login information.

According to this specification, when an account is created for each of a plurality of content providers, integrated management of a plurality of service may be performed through a virtual account.

According to this specification, account integration may be performed through an application provided by a content provider or an application on a screen of a display device.

According to this specification, integration and separation of virtual accounts with family members may be performed while a subscription to a content service is recommended based on a usage frequency.

According to this specification, when playback of content is paused or unpaused, the playback of the content may be controlled by determining whether a login is made from another device.

### BRIEF DESCRIPTION OF THE DRAWINGS

FIG. 1 is a block diagram illustrating a configuration of a display device according to an embodiment of the present disclosure.
FIG. 2 is a diagram for explaining a content server according to an embodiment of the present disclosure.
FIG. 3 is a diagram for explaining a content providing system according to an embodiment of the present disclosure.
FIG. 4 is a flowchart of, by a display device, logging in to a content server based on a virtual account according to the present disclosure.
FIGS. 5A and 5B illustrate an initial screen and a login screen of a display device each provided through a control server managed by a manufacturer of the display device, respectively.
FIGS. 6A and 6B illustrate an initial screen and a screen showing profiles of a plurality of users, respectively, when a login is performed with a login account of a particular user at home.
FIG. 7 is a flowchart of an embodiment of creating a plurality of accounts corresponding to a virtual account by interfacing with a plurality of content servers according to the present disclosure.
FIG. 8 is a flowchart of a method performed by a content providing system in relation to integration into a virtual account and subscription recommendation according to the present disclosure.
FIG. 9 is a flowchart of a method performed by the content providing system in relation to management of virtual accounts between family members according to the present disclosure.
FIG. 10 is a flowchart of a method for requesting, by the content providing system according to the present disclosure, an integrated subscription between family members.
FIG. 11 is a flowchart of a method of performing content control by determining automatic logout time and whether a login has been made from another device according to a request for pausing.
FIG. 12 is flowchart of a method of performing content control by determining a logout state and whether a login has been made from another device according to a request for unpausing.
FIG. 13 is a flowchart a flowchart of a method of performing content control by determining whether content was played with another login account according to a request for unpausing.

### DETAILED DESCRIPTION

It is noted that the technical terms used herein are used only to describe specific embodiments and are not intended to limit the disclosure. In addition, a singular representation used herein may include a plural representation unless it represents a definitely different meaning from the context. In general, a suffix such as "module" and "unit" may be used to refer to elements or components. Use of such a suffix herein is merely intended to facilitate description of the specification, and the suffix itself is not intended to give any special meaning or function.

In the present disclosure, the terms "comprising" or "including" should not be construed to necessarily include all of the elements or steps disclosed herein, and should be construed not to include some of the elements or steps thereof, or should be construed to further include additional elements or steps.

In addition, in describing the present disclosure, when a detailed explanation for a related known technology or construction is considered to unnecessarily obscure the gist of the present disclosure, such explanation has been omitted but would be understood by those skilled in the art.

The accompanying drawings are used to help easily understand the technical idea of the present disclosure and it should be understood that the idea of the present disclosure is not limited by the accompanying drawings. The idea of the present disclosure should be construed to extend to any alterations, equivalents and substitutes besides the accompanying drawings. In addition, each of the embodiments described below, as well as combinations of embodiments, are changes, equivalents, or substitutes included in the spirit and technical scope of the present disclosure, and may fall within the spirit and technical scope of the present disclosure.

Hereinafter, embodiments disclosed in this specification will be described in detail with reference to the accompanying drawings.

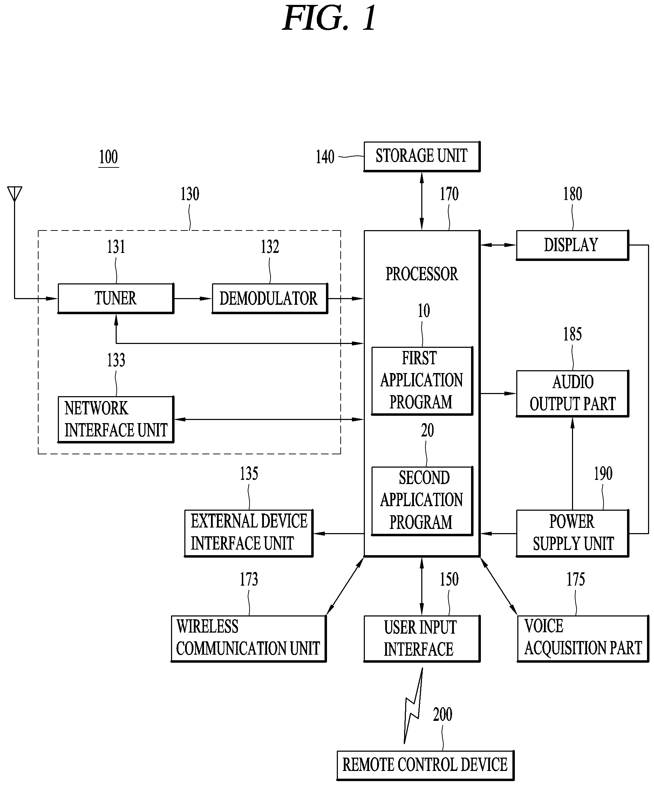

FIG. 1 is a block diagram illustrating a configuration of a display device according to an embodiment of the present disclosure.

Referring to FIG. 1, a display device 100 may include a broadcast receiving unit 130, an external device interface unit 135, a storage unit 140, a user input interface 150, a processor 170, a wireless communication unit 173, a voice acquisition part 175, the display 180, an audio output part 185, and a power supply unit 190.

The broadcast receiving unit 130 may include a tuner 131, a demodulator 132, and a network interface unit 133.

The tuner 131 may tune a particular broadcast channel according to a channel tunning command. The tuner 131 may receive a broadcast signal for the tuned particular broadcast channel.

The demodulator 132 may divide the received broadcast signal into a video signal, an audio signal, and a data signal related to a broadcast program, and may restore the video signal, the audio signal, and the data signal, each obtained by the dividing, into a form that may be output.

The network interface unit 133 may provide an interface for connecting the display device 100 to a wired/wireless network including an Internet network. The network interface unit 133 may transmit or receive data to/from another user or another electronic device via a connected network or another network linked to the connected network.

The network interface unit 133 may access a particular web page via the connected network or the another network linked to the connected network. That is, the network interface unit 133 may access a predetermined web page through a network to transmit or receive data to or from a corresponding server.

In addition, the network interface unit 133 may receive content or data provided by a content provider or a network operator. That is, the network interface unit 133 may receive content such as movies, advertisements, games, video on demand (VOD), broadcast signals, or the like, and relevant information each provided from a content provider or a network provider through a network.

In addition, the network interface unit 133 may receive update information and update files of firmware provided by a network operator, and transmit data to an Internet or content provider or a network operator.

The network interface unit 133 may select and receive a desired application from among applications open to public via a network.

The external device interface unit 135 may receive an application or a list of applications in an adjacent external device and transmit the received application or list of applications to the processor 170 or the storage unit 140.

The external device interface unit 135 may provide a connection path between the display device 100 and an external device. The external device interface unit 135 may receive one or more of images and audio information output from an external device wirelessly or wiredly connected to the display device 100 and transmit the received one or more of images and audio information to the processor 170. The external device interface unit 135 may include a plurality of external input terminals. The plurality of external input terminals may include a red, green, and blue (RGB) terminal, one or more high definition multimedia interface (HDMI) terminals, or a component terminal.

An image signal input from an external device through the external device interface unit 135 may be output through the display 180. A voice input signal from an external device through the external device interface unit 135 may be output through the audio output part 185.

An external device that may be connected to the external device interface unit 135 may be any one of a set-top box, a Blu-ray player, a digital versatile disk (DVD) player, a game console, a sound bar, a smartphone, a PC, a universal serial bus (USB) memory, and a home theater, but this is only an example.

In addition, some of content data stored in the display device 100 may be transmitted to a user or an electronic device selected from among other users or other electronic devices each pre-registered in the display device 100.

The storage unit 140 may store a program for processing and controlling each signal in the processor 170, and store a signal-processed image, voice, or a data signal.

In addition, the storage unit 140 may perform a function of temporarily storing images, voice, or data signals input from the external device interface unit 135 or the network interface unit 133, and may also store information about a predetermined image through a channel memory function.

The storage unit 140 may store an application or a list of applications input from the external device interface unit 135 or the network interface unit 133.

The display device 100 may play content files (moving image files, still image files, music files, document files, application files, etc.) stored in the storage unit 140 to provide the content files to a user.

The user input interface 150 may transmit a signal input by a user to the processor 170 or transmit a signal transmitted from the processor 170 to the user. For example, the user input interface 150 may receive and process control signals for power on/off, channel selection, screen settings, or the like from a remote control device 200 according to various communication methods such as Bluetooth, ultra wideband (WB), ZigBee, radio frequency (RF) communication, or infrared (IR) communication, or the like, or may process a control signal received from the processor 170 to be transmitted to the remote control device 200.

In addition, the user input interface 150 may transmit, to the processor 170, control signals input from local keys (not shown) such as a power key, a channel key, a volume key, and a setting key.

An image signal obtained by performing image processing by the signal processing device 170 may be input to the display 180 and displayed as an image corresponding to the image signal. In addition, an image signal obtained by performing image processing by the signal processing device 170 may be input to an external output device through the external device interface unit 135.

A voice signal processed by the processor 170 may be output as audio to the audio output part 185. In addition, a voice signal processed by the processor 170 may be input to an external output device through the external device interface unit 135.

In addition, the processor 170 may control all operations in the display device 100.

In addition, the processor 170 may control the display device 100 by a user command input through the user input interface 150 or by an internal program. The processor 170 may be connected to a network and allow a user to download a desired application or list of applications into the display device 100. A configuration may be made such that at least one application program is executed on the processor 170 to control the display device 100. A first application program 10 may be executed to determine whether to purchase, play, refund, or resell particular content based on viewing history and playback time of the particular content. A second application program 20 may be executed to store and manage information about playback history and playback time for particular content.

The processor 170 causes channel information or the like selected by a user to be output together with a processed image or voice signal through the display 180 or the audio output part 185.

In addition, according to an external device image playback command received through the user input interface 150, the processor 170 allows an image signal or a voice signal input through the external device interface unit 135 from an external device, for example, a camera or a camcorder to be output through the display 180 or the audio output part 185.

Meanwhile, the processor 170 may control the display 180 to display an image, and for example, control a broadcast image input through the tuner 131, an external input image input through the external device interface unit 135, an image input through the network interface unit, or an image stored in the storage unit 140 to be displayed on the display 180. In this case, an image displayed on the display 180 may be a still image or a moving image, and may be a two-dimensional (2D) image or a three-dimensional (3D) image.

In addition, the processor 170 may control to play content stored in the display device 100, received broadcast content, or external input content input from outside, and content may be in various forms such as a broadcast image, an external input image, an audio file, a still image, an accessed web screen, or a document file.

The wireless communication unit 173 may perform communication with an external device through wired or wireless communication. The wireless communication unit 173 may perform short range communication with an external device. To do so, the short-range communication unit 173 may support short-range communication using at least one of Bluetooth^{™}, Bluetooth low energy (BLE), radio frequency identification (RFID), infrared data association (IrDA), ultra wideband (UWB), ZigBee, near field communication (NFC), wireless-fidelity (Wi-Fi), Wi-Fi Direct, and wireless universal serial bus (USB) technologies. The wireless communication unit 173 may support, through short-range wireless communication networks, wireless communication between the display device 100 and a wireless communication system, between the display device 100 and another display device 100, or between the display device 100 and a network on which the display device 100 (or an external server) is located. The short-range wireless network may be a wireless personal area network.

Here, the another display device 100 may be a wearable device capable of exchanging data (or interfacing with) the display device 100 according to the present disclosure, e.g., a mobile terminal such as a smartwatch, smart glass, a head mounted display (HMD), or a smartphone. The wireless communication unit 173 may detect (or recognize) a wearable device capable of communication in a periphery of the display device 100. Furthermore, when the detected wearable device is a device authenticated to communicate with the display device 100 according to the present disclosure, the processor 170 may transmit at least a part of data processed in the display device 100 to the detected wearable device via the wireless communication unit 173. Therefore, a user of the wearable device may use data processed by the display device 100 through the wearable device.

The voice acquisition part 175 may obtain audio. The voice acquisition part 175 may include at least one microphone (not shown), and obtain audio in a periphery of the display device 100 through the microphone (not shown).

The display 180 may generate a driving signal by converting an image signal, a data signal, or an on-screen control (SOD) signal each processed by the processor 170, or an image signal, a data signal, etc. received from the external device interface unit 135 into R, G, and B signals, respectively.

Meanwhile, since the display device 100 illustrated in FIG. 1 is only one embodiment of the present disclosure, some of components illustrated in the drawing may be combined, added, or omitted depending on a specification of the display device 100 that is actually implemented.

That is, configuration may be made such that two or more components may be combined into one component or one component may be subdivided into two or more components as needed. In addition, functions performed in respective blocks are to describe an embodiment of the present disclosure, and specific operations or devices do not limit the scope of the present disclosure.

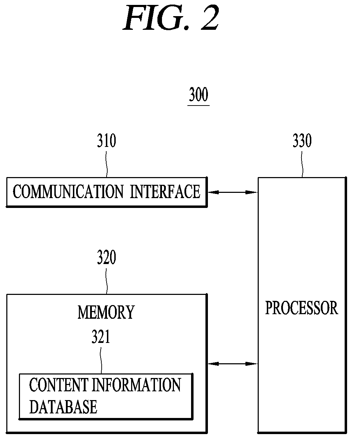

FIG. 2 is a diagram for explaining a content server according to an embodiment of the present disclosure.

A content server 300 may provide a recommendation service for recommending content that may be preferred by viewers using the display device 100.

The content server 300 may include a communication interface 310, a memory 320, and a processor 330.

The content server 300 may transmit or receive data through wired or wireless communication with at least one display device 100 via the communication interface 310.

The memory 320 may include a content information database 321. The content information database 321 may store information related to content played on each device. For example, the content information database 321 may store content playback information, content setting information, or application installation information in association with identification information of each device.

When the processor 330 receives a content recommendation request from the display device 100 or an external device, the processor 330 may recommend content optimized for each device based on data stored in the content information database 321.

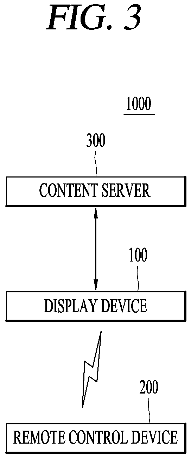

FIG. 3 is a diagram for explaining a content providing system according to an embodiment of the present disclosure.

A content providing system 1000 may include at least one display device 100, at least one remote control device 200, and the content server 300.

The processor 170 of the display device 100 may play content.

Additionally, the processor 170 may generate content playback information regarding the played content. Additionally, the processor 170 may generate content setting information which is information about image quality, volume, and preferred channels each set when content is played.

The content playback information may include at least one of content identification information for played content, content genre information, content playback start time information, content playback end time information, and total content playback time information.

The content setting information may include at least one of image quality information and volume information each set for content when the content is played, and preferred channel information regarding whether a user has registered a channel providing the content as a preferred channel.

The processor 170 may transmit device identification information of the display device 100, the generated content playback information, and the generated content setting information to the content server 300 through the communication interface 173. The device identification information may be unique identification information used to distinguish a device from other devices.

The content server 300 may store the content playback information and the content setting information each received from the display device 100 in the content information database 321 in association with the device identification information.

Meanwhile, the processor 170 may receive a content recommendation command through the user input interface 150 or the voice acquisition part 175.

When the processor 170 receives the content recommendation command, the processor 170 may transmit the device identification information of the display device 100 and a content recommendation request to the content server 300 through the communication interface 173.

The communication interface 310 of the content server 300 may receive the device identification information and the content recommendation request from the display device 100.

The processor 330 of the content server 300 may obtain content playback information and content setting information associated with the display device 100 from the content information database 321 based on the device identification information.

The processor 330 may generate content recommendation information and recommendation setting information for the display device 100 based on the content playback information and the content setting information. The content recommendation information may include recommended content identification information and recommended content genre information for at least one piece of recommended content. Additionally, the recommended setting information may include recommended image quality setting information and preferred channel information.

The processor 330 may transmit the content recommendation information and the recommendation setting information to the display device 100 through the communication interface 310.

The processor 170 may receive the content recommendation information and the recommendation setting information from the content server 300 through the communication interface 173.

The processor 170 may display at least one piece of recommended content based on the received content recommendation information. In addition, when a playback command for recommended content is input through the user input interface 150 or the voice acquisition part 175, the processor 170 may set image quality for the recommended content to be played based on the received recommendation setting information and play the recommended content.

When the recommended content is played by setting the image quality for the recommended content and a change to a preferred channel is input from a user, a channel may be changed to the preferred channel based on the preferred channel information.

Meanwhile, the display device 100 may mirror content being played to an external device. The external device may include another display device or a mobile device. In this case, the mirrored content may be viewed through the external device. Therefore, viewing information about the mirrored content needs to be basic data for recommending content to the external device.

Meanwhile, when the display device 100 performs a mirroring operation on an external device, a control command for controlling the display device 100 may be received from the external device. The control command may include a content change command for changing content to be played from first content to second content. When the display device 100 receives the content change command, the display device 100 may play a result of the changing, i.e., changed content. In this case, the display device 100 needs to transmit content playback information about the changed content to the content server 300 as information for content recommendation for the external device.

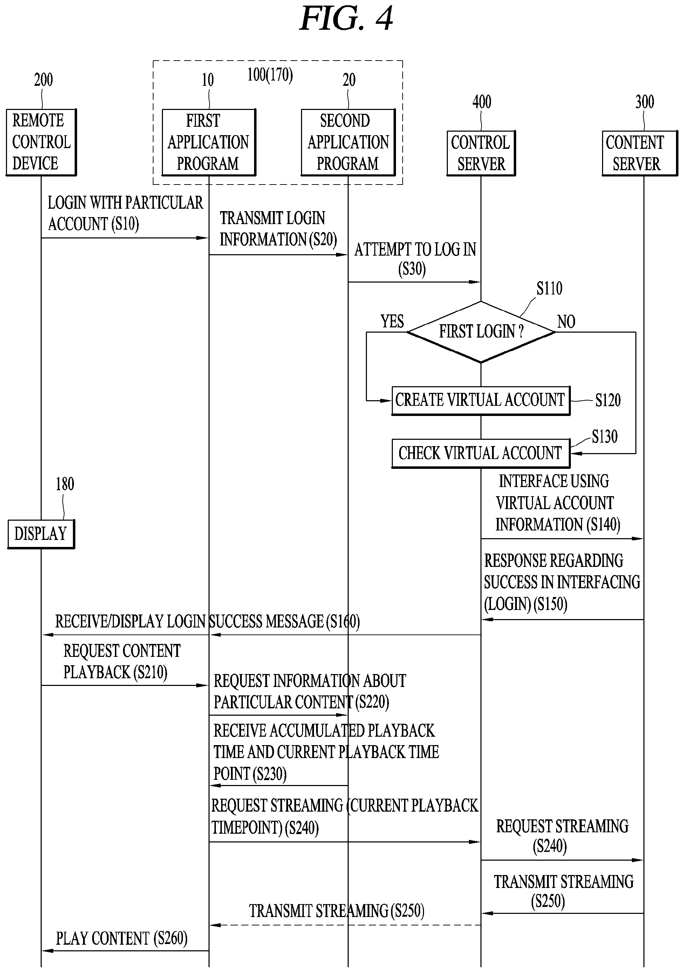

Hereinafter, an operation process of a display device configured to interface with a server in a content providing system according to the present disclosure is described. In this regard, FIG. 4 shows a flowchart of, by a display device, logging in to a content server based on a virtual account according to the present disclosure.

In this regard, an objective of the present specification is to provide a display device configured to interface with a content server using a virtual account. An objective of this specification is to support a function that allows to purchase and play individual content without separate membership registration on a server operated by a content provider. An objective of this specification is to create a virtual account not to provide information about an account of a manufacturer of a display device. An objective of this specification is to support a function that allows to purchase and play individual content through an account of a manufacturer of a display device without separate membership registration on a server operated separately by a content provider.

Referring to FIGS. 1 to 4, a display device configured to interface with a server in the content providing system according to the present disclosure is described. In this regard, the content providing system according to the present disclosure may be configured to include the display device 100, the remote control device 200, the content server 300, and a control server 400. The display device 100 may be configured to include the wireless communication unit 173, the processor 170, and the display 180.

The processor 170 may control the display device 100 by a user command input through the user input interface 150 or by an internal program. The processor 170 may be connected to a network and allow a user to download a desired application or list of applications into the display device 100. A configuration may be made such that at least one application program is executed on the processor 170 to control the display device 100. The first application program 10 may be executed to determine whether to purchase, play, refund, or resell particular content based on viewing history and playback time of the particular content. The second application program 20 may be executed to store and manage information about playback history and playback time for particular content.

The first application program 10 may be configured as an application program that is a software platform, but is not limited thereto and may be changed depending on an application. The second application program 20 may be configured as webOS, which is an operating system of the display device 100, but is not limited thereto and may be changed depending on an application.

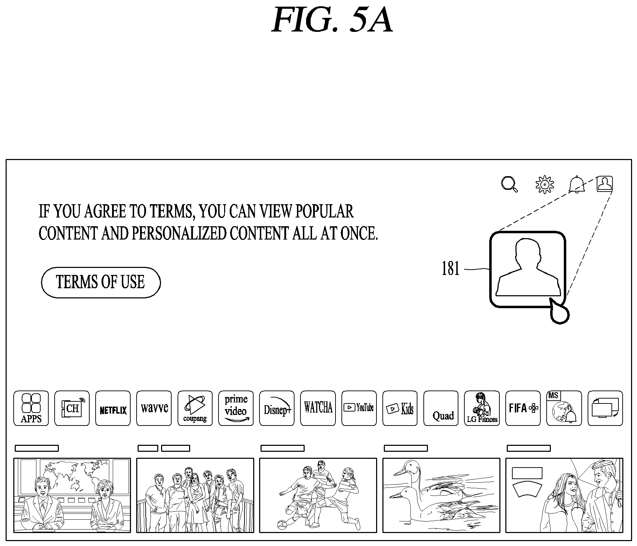

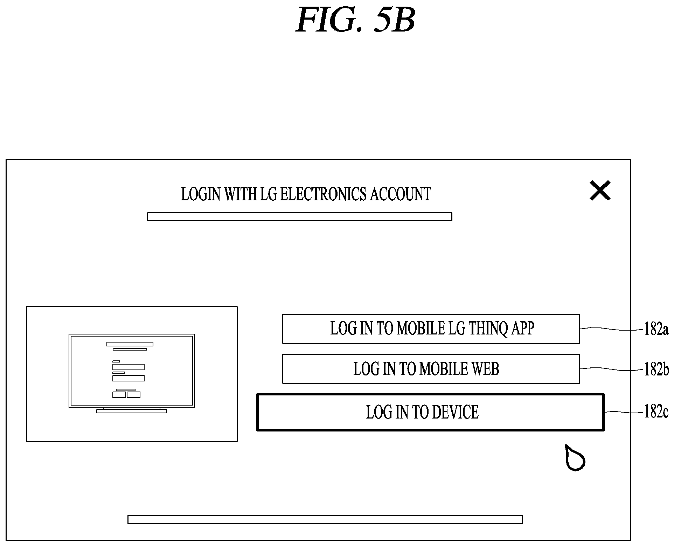

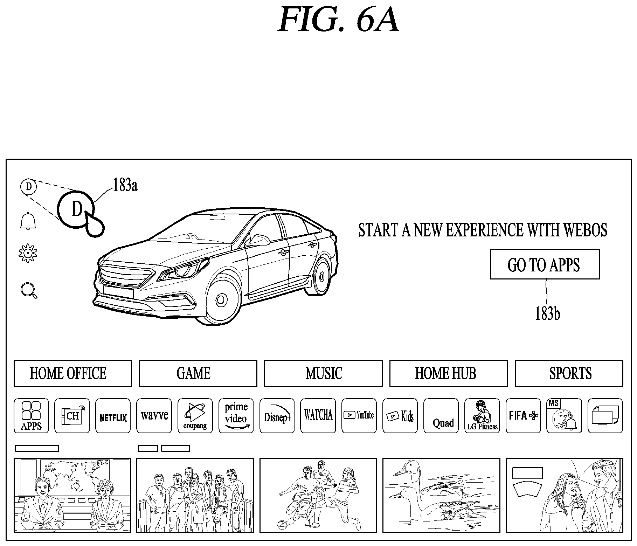

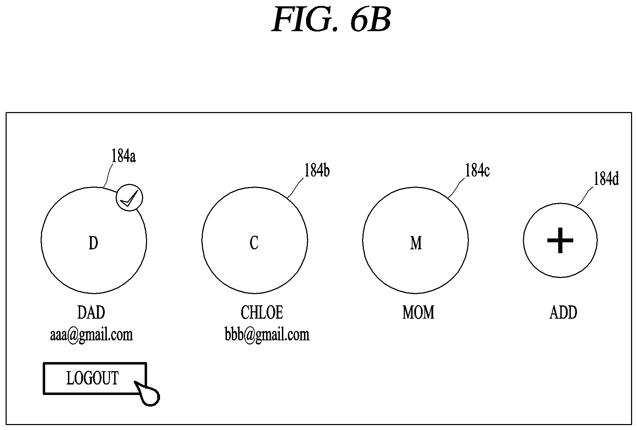

The display 180 may be configured to display a screen for requesting a login with a particular account for viewing content. In this regard, FIGS. 5A and 5B illustrate an initial screen and a login screen of a display device, each provided through a control server managed by a manufacturer of the display device, respectively. Meanwhile, FIGS. 6A and 6B illustrate an initial screen and a screen showing profiles of a plurality of users, respectively, when a login is performed with a login account of a particular user at home.

Referring to FIGS. 1, 4, and 5A, information regarding terms of use, an icon 181, and icons corresponding to services provided by a plurality of a plurality of content servers may be displayed on the initial screen of the display 180 of the display device 100. When an input of selecting the icon 181 is received via the remote control device 200, the login screen related to login options may be displayed.

Referring to FIGS. 1, 3, 4, and 5B, a plurality of icons 182a, 182b, and 182c related to the login options may be displayed on the display 180. A configuration may be made such that when an input to the icon 182a is received from the remote control device 200, a login with a particular account may be performed through an application program of a mobile terminal 500. A configuration may be made such that when an input to the icon 182b is received from the remote control device 200, a login with a particular account in a mobile web environment may be performed. A configuration may be made such that when an input to the icon 182c is received from the remote control device 200, a login with a particular account may be performed through the display device 100.

Referring to FIGS. 1, 3, 4 and 6A, an icon 183a associated with a first login account of a first user may be displayed on one side of a display 180. An icon 183b that allows to execute a second application program such as webOS may be displayed on another side of the display 180. Meanwhile, the icons corresponding to the services provided by the plurality of content servers may be displayed on the display 180 to be distinguished from each other according to categories. The icons corresponding to the services provided by the plurality of content servers may be displayed to be distinguished from each other according to categories including home office, game, music, home hub, and sports.

Referring to FIGS. 1, 3, 4, 6A and 6B, icons 184a, 184b, 184c, and 184d associated with a plurality of profiles of the plurality of users may be displayed on a screen in a particular area on the display 180. Depending on an input of selecting the icon 183a associated with the first login account, the icons 184a, 184b, 184c, and 184d for a plurality of login accounts of family members may be displayed on the screen. The icon 184a associated with the first login account of the first user corresponding to Dad may be displayed on the screen. For example, the first login account of the first user may be aaa@gmail.com. An icon 185a for logging out of the first login account of the first user who has been in a login state may be displayed on an area below the icon 184a associated with a profile of the first user.

Meanwhile, the icon 184b associated with a second login account of a second user corresponding to Chloe may be displayed on the screen. For example, the second login account of the second user may be bbb@gmail.com. The icon 184c associated with a third login account of a third user corresponding to Mom may be displayed on the screen. Additionally, the icon 184d for creating a fourth login account for another user, i.e., a fourth user may be displayed on the screen.

Hereinafter, referring to FIGS. 1 to 6B, a display device configured to interface with a server in the content providing system according to the present disclosure is described. The display device 100 may be configured to include the user input interface 150, the processor 170, and the display 180.

The user input interface 150 may be configured to receive a request for a login with a particular account for viewing content from the remote control device 200 (S10). The processor 170 may be configured to obtain screen information for viewing the content based on the request for the login with the particular account. In this regard, requests for logins with the first login account to the third login account of the first user to the third user of FIG. 6B may be received through the user input interface 150, respectively.

The display 180 may be configured to display a screen for a request for a login, as shown in FIG. 5B or 6B. The display 180 may be configured to display a particular screen according to screen information obtained for each login account when logging in with the particular account. In this regard, when a login is performed with the first login account of the first user corresponding to Dad of FIG. 6B, the screen of FIG. 6A may be displayed on the display 180.

Hereinafter, a login procedure performed by the processor 170 and processes of creating or checking a virtual account by interfacing with the control server 400 to play content are described in detail. The processor 170 may transmit login information to the second application program 20 that interfaces with the control server 400 (S20). The second application program 20 may use the login information to transmit a request for a login through a login account of a particular user to the control server 400 (S30). Accordingly, a login may be attempted through the login account of the particular user.

The processor 170 may control the second application program 20 to attempt the login with the particular account by interfacing with the control server 400 based on the login information. The processor 170 may determine whether the attempt to the login is a first login attempt using the login information based on the interfacing with the control server 400 (S110).

When the login attempt is the first login attempt using the login information of the particular account, the processor 170 may receive, from the content server 300, an interface response indicating that the login was performed using a created virtual account by interfacing with the control server 400 (S160). In this regard, a request for interfacing (S140) between servers using the virtual account may be transmitted from the control server 400 to the content server 300 (S140). The control server 400 may receive a response (S150) regarding a success in the interfacing (login) from the content server 300.

The processor 170 may receive, through the content server 300 and the control server 400, an interface response associated with the successful login such that the interfacing with the particular content server 300 has been successfully established through the login using the created virtual account. When the interface response associated with the successful login is received, the processor 170 may display a message regarding the login success on a screen of the display 180.

Meanwhile, in the present disclosure, a previous virtual account may be checked based on history of previous logins with a particular account, thereby enabling access to the content server 300 through the control server 400 without having to create a separate virtual account. In this regard, when a login was attempted previously using login information of a particular account, the processor 170 may interface with the control server 400 to check a virtual account corresponding to information about the previous login (S130). In this regard, the processor 170 may interface with the control server 400 to obtain the virtual account corresponding to the previous login information from the control server 400. The processor 170 may interface with the control server 400 to receive an interface response indicating that interfacing with a particular content server 300 has been successfully established using the obtained virtual account (S150).

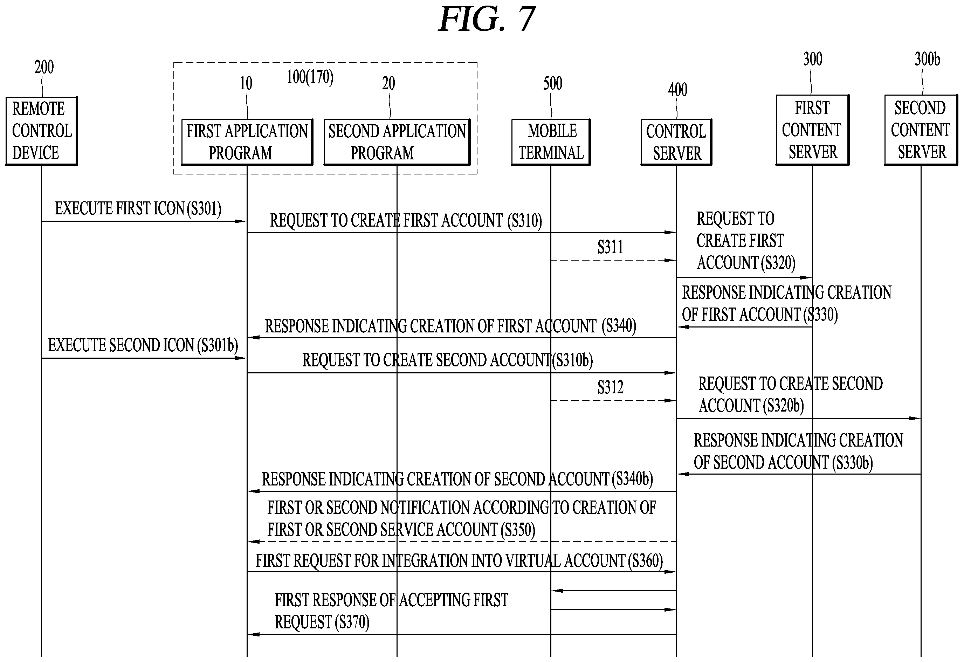

Meanwhile, a virtual account may be created for each of a plurality of content providers (CPs) through a display device according to the present disclosure. In this regard, FIG. 7 illustrates a flowchart of an embodiment of creating a plurality of accounts corresponding to a virtual account by interfacing with a plurality of content servers according to the present disclosure.

Referring to FIGS. 1 to 7, the processor 170 may generate a first account corresponding to a virtual account by interfacing with a first content server 300, in correspondence with a first execution input to a first icon on the display 180. For example, the first content server 300 may be a content server configured to provide an Apple TV service. Accordingly, a first account corresponding to a virtual account of aaa@lge.com may be created as aaa@lge.apple.com, but is not limited thereto.

In this regard, the processor 170 may receive a first execution input to the first icon from the remote control device 200 (S301). The processor 170 may transmit, to the first content server 300, a first account creation request for creating the first account corresponding to the virtual account by interfacing with the control server 400 (S310 and S320). The processor 170 may receive, from the first content server 300, a first account creation response indicating that the first account has been created by interfacing with the control server 400 (S330 and S340).

In addition, the processor 170 may create a second account corresponding to the virtual account by interfacing with a second content server 300b, in correspondence with a second execution input to a second icon on the display 180. For example, the second content server 300b may be a content server configured to provide a Netflix service. Accordingly, a second account corresponding to the virtual account of aaa@lge.com may be created as aaa@lge.netflix.com, but is not limited thereto.

In this regard, the processor 170 may receive a second execution input to the second icon from the remote control device 200 (S301b). The processor 170 may transmit, to the second content server 300b, a second account creation request for creating the second account corresponding to the virtual account by interfacing with the control server 400 (S310b and S320b). The processor 170 may receive, from the second content server 300b, a second account creation response indicating that the second account has been created by interfacing with the control server 400 (S330b and S340b).

Meanwhile, in the content providing system according to the present disclosure, a user who has applied for an account for a service through a virtual account may apply for a separate service account. In this regard, a user who has applied for a service account through a virtual account may apply for a separate service account to be created separately through a web page or an application associated with a content server. A particular user may transmit a request for creating a first service account and/or a request for creating a second service account to the control server 400 through the mobile terminal 500 (S311 and S312). A first service account of a first user for the first content server 300 may be created as aaa@apple.com. A second service account of the first user for the second content server 300b may be created as aaa@netflix.com.

The processor 170 may receive, through the control server 400, a first notification indicating that the first service account has been created or a second notification indicating that the second service account has been created (S350). In this regard, the first service account may be created through a first application program corresponding to the first content server 300. Additionally, the second service account may be created through a second application program corresponding to the second content server 300b. Meanwhile, the first service account and the second service account may be accounts of a same person as the virtual account. For example, the first service account of aaa@apple.com and the second service account of aaa@netflix.com may be accounts of a same person as the virtual account of aaa@lge.com. Both the first service account and the second service account may be accounts of the first user, for example, Dad.

Meanwhile, the display device according to the present disclosure may integrate accounts to transmit a request to a user to integrate a separate service account into a virtual account. Management and distribution of content by a display device manufacturer may be facilitated through integration of accounts into a virtual account. Additionally, through integration of accounts into a virtual account, users may view pieces of content provided by a plurality of content providers with one virtual account without having to create separate accounts.

The processor 170 may transmit a first request requesting to integrate a first service account or a second service account into a virtual account to the mobile terminal 500 via the control server 400 (S360). In this regard, a first user may be in a state of having requested creation of the first service account through the mobile terminal 500. The processor 170 may transmit, to the mobile terminal 500, a message indicating that integrated management of a plurality of services may be performed through the virtual account when the first service account or the second service account is integrated into the virtual account.

The processor 170 may receive, from the mobile terminal 500, a first response of accepting the first request (S370). Upon receiving the first response, the processor 170 may control the control server 400 to integrate the first service account or the second service account into the virtual account. Therefore, the integration into the virtual account may be performed through a screen displayed on the mobile terminal 500.

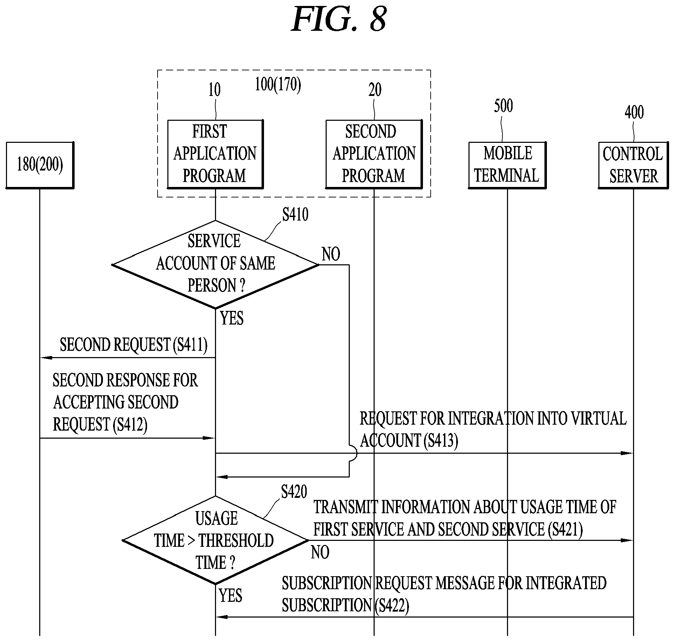

Meanwhile, the content providing system according to the present disclosure may perform integration into a virtual account through a screen displayed on a display device. In addition, the content providing system according to the present disclosure may recommend a subscription based on a usage frequency and usage time of a user, etc. In this regard, FIG. 8 illustrates a flowchart of a method performed by a content providing system in relation to integration into a virtual account and subscription recommendation according to the present disclosure.

Referring to FIGS. 1 to 8, when a login is attempted for first time using login information of a particular account, the processor 170 may create a virtual account (S120). The processor 170 may determine whether there is a first service account or a second service account of a same person as the created virtual account (S410). When a login was attempted previously using the login information of the particular account, the processor 170 may obtain a virtual account (S130). The processor 170 may determine whether there is a first service account or a second service account of a same person as the obtained virtual account (S410).

When there is not a first service account or a second service account of the same person as the virtual account, operation S420 and subsequent operations relevant to an operation of recommending a subscription based on a usage frequency and usage time of a user through the virtual account may be performed. When there is a first service account or a second service account of the same person as the virtual account, the processor 170 may display, on the display 180, a second request requesting to integrate the first service account or the second service account into the virtual account. When the first service account or the second service account are integrated into the virtual account, the processor 170 may display, on the display device 180, a message indicating that integrated management of a plurality of services may be performed through the virtual account. The processor 170 may display, on the display 180, a message indicating that the integrated management may be performed by transmitting the second request for the integrated management of the plurality of services through the virtual account (S411).

The processor 170 may receive, from the remote control device 200 wirelessly connected to the display device 100, a second response for accepting the second request for the integration into the virtual account (S412). Upon receiving the second response for the integration into the virtual account, the processor 170 may control the control server 400 to integrate the first service account or the second service account into the virtual account. To do so, the processor 170 may transmit, to the control server 400, an integration request for integrating the first service account or the second service account into the virtual account (S413).

The content providing system according to the present disclosure may recommend a subscription based on a usage frequency and usage time of a user. In this regard, the processor 170 may determine whether first usage time of a first service from the a first content server 300 through a first account exceeds first threshold time. Additionally, the processor 170 may determine whether second usage time of a second service through a second account exceeds second threshold time. Accordingly, the processor 170 may determine whether the first usage time exceeds the first threshold time and the second usage time exceeds the second threshold time (S420).

When the first usage time and the second usage time exceed the first threshold time and the second threshold time, respectively, the processor 170 may transmit information about usage time of the first service and the second service to the control server 400 (S421). The processor 170 may display, on the display 180, a subscription request message for an integrated subscription service with respect to the first service and the second service by interfacing with the control server 400. To do so, the processor 170 may receive the subscription request message for the integrated subscription service with respect to the first service and the second service from the control server 400 (S422).

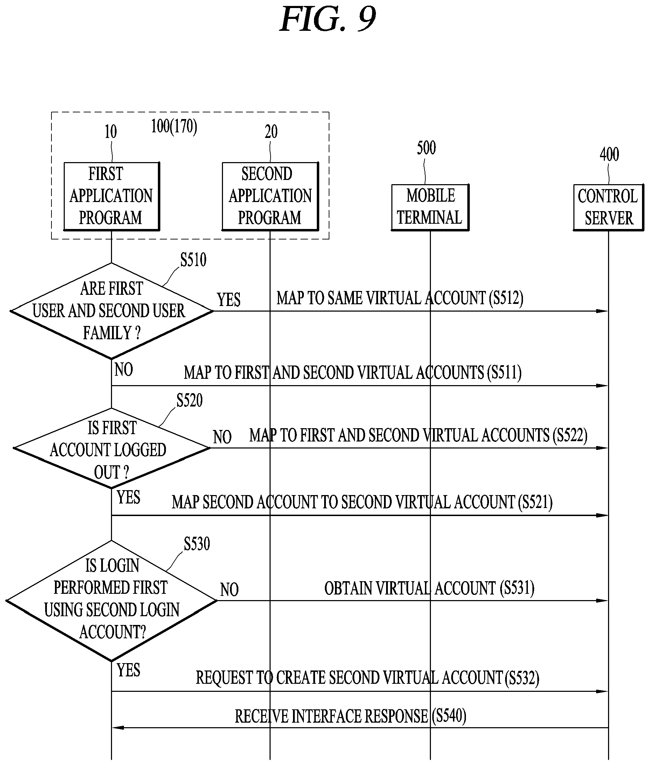

Meanwhile, in a content playback system according to the present disclosure, integration and separation of virtual accounts between of family members may be performed. In this regard, FIG. 9 illustrates a flowchart of a method performed by the content providing system in relation to management of virtual accounts between family members according to the present disclosure. As illustrated in FIG. 6B, the processor 170 may create login accounts for a plurality of users, respectively.

Referring to FIGS. 1 to 9, the processor 170 may determine whether a relationship between a first user and a second user among a plurality of users is set as a family (S430). When the relationship between the first user and the second user is not set as a family, the processor 170 may transmit, to the control server 400, a first mapping request for mapping first and second login accounts of the first and second users to separate first and second virtual accounts, respectively (S511).

When the relationship between the first user and the second user is set as a family, the processor 170 may control the control server 400 to map the first login account of the first user and the second login account of the second user to a same virtual account. The processor 170 may transmit, to the control server 400, a second mapping request for mapping the first login account of the first user and the second login account of the second user to the same virtual account (S512).

The processor 170 may determine whether the first login account is in a logged-out state and the second login account is in a logged-in state (S520). The first login account may be set as a representative account among login accounts. When the first login account is in a logged-out state and the second login account is in a logged-in state, the processor 170 may control the control server 400 to map the second login account to the second virtual account (S521). In a state in which the first and second login accounts are mapped to a same virtual account, when the second login account is logged out, and then, a login is performed again with the second login account, the second login account may be separated from the same virtual account. Therefore, as the first login account is logged out, the second login account may be separated from the same virtual account and mapped separately to the second virtual account.

The processor 170 may transmit, to the control server 400, the first mapping request for mapping the first and second login accounts of the first and second users to the separate first and second virtual accounts, respectively (S522). When the first login account is not in a logged-out state, the processor 170 may transmit, to the control server 400, the second mapping request for mapping the first and second login accounts to the same virtual account.

Meanwhile, in the content providing system according to the present disclosure, it may be considered that when a first user is in a logged-out state, another user intends to log in with another virtual account instead of a same virtual account used in common. In a state of being mapped to the same virtual account, when a first login account is logged out, the processor 170 may determine whether a login is performed first using a second login account (S530).

In a state of mapping to the same virtual account, when a login is performed with the second login account that was previously logged in, the processor 170 may obtain a virtual account from the control server 400 (S531). In a state of mapping to the same virtual account, when the first login account is in a logged-out state and a login is performed first with the second login account, the processor 170 may request the control server 400 to create a second virtual account (S532). The processor 170 may interface with the control server 400 to receive an interface response indicating that interfacing with a particular content server has been successfully established through the created second virtual account (S540).

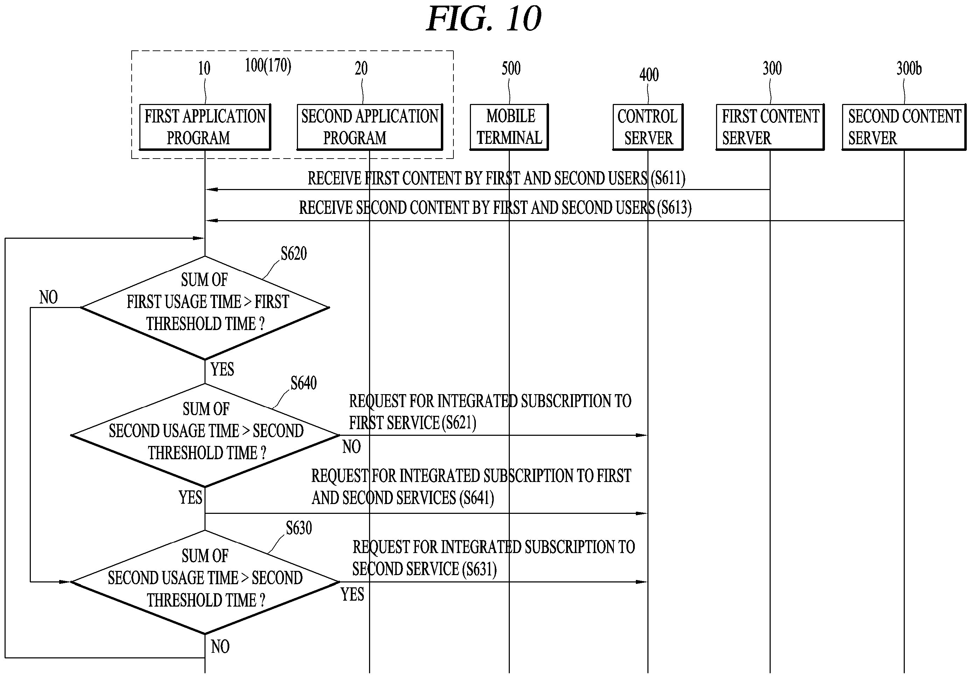

Meanwhile, the content providing system according to the present disclosure may be configured to request an integrated subscription between family members. In this regard, FIG. 10 illustrates a flowchart of a method of requesting, by the content providing system according to the present disclosure, an integrated subscription between family members. Referring to FIGS. 1 to 10, the method of requesting an integrated subscription between family members is described.

The processor 170 may interface with the first content server 300 and the second content server 300b using a virtual account. The processor 170 may receive first content from the first content server 300 using a virtual account (S611). The processor 170 may receive second content from the second content server 300b using the virtual account (S613).

The processor 170 may determine whether a sum of first usage time of a first service provided by the first content server 300 through a first login account of a first user and a second login account of a second user exceeds first threshold time (S620). The processor 170 may determine whether a sum of second usage time of a second service through the first login account and the second login account exceeds second threshold time (S630). In this regard, when the first and second login accounts are integrated and managed using a same virtual account, a sum of usage time of a particular service may be calculated through the virtual account.

When the sum of the first usage time exceeds the first threshold time, the processor 170 may transmit, to the control server 400, an integrated subscription request message regarding the first service for the first user and the second user (S621). In relation to this, the processor 170 may determine whether the sum of the first usage time exceeds the first threshold time and the sum of the second usage time exceeds the second threshold time (S640).

When the sum of the first usage time exceeds the first threshold time but the sum of the second usage time does not exceed the second threshold time, the processor 170 may transmit the integrated subscription request message regarding the first service to the control server 400 (S621). Accordingly, through a subscription in consideration of a sum of usage amount of the first service in a first channel by the first user and the second user, the first service in the first channel may be used at a lower cost than a cost of individual viewing.

When the sum of the second usage time exceeds the second threshold time, an integrated subscription request message regarding a second service for the first user and the second user may be transmitted to the control server 400 (S631). When the sum of the first usage time does not exceed the first threshold time but the sum of the second usage time exceeds the second threshold time, the processor 170 may transmit the integrated subscription request message regarding the second service to the control server 400 (S631). Accordingly, through a subscription in consideration of a sum of usage amount of the second service in the second channel by the first user and the second user, the second service in the second channel may be used at a lower cost than a cost of individual viewing.

As described above, the processor 170 may determine whether the sum of the first usage time exceeds the first threshold time and the sum of the second usage time exceeds the second threshold time (S640). When the sum of the first usage time exceeds the first threshold time and the sum of the second usage time exceeds the second threshold time, the processor 170 may transmit an integrated subscription request message to the control server 400 (S641). Accordingly, through an integrated subscription in consideration of a sum of usage amount of services in a plurality of channels by a plurality of users, a plurality of services in a plurality of channels may be used at a lower cost than a cost of subscriptions for each channel.

When a sum of the first usage time does not exceed the first threshold time and a sum of the second usage time does not exceed the second threshold time, the processor 170 may repeat from a process of determining whether the sum of the first usage time of the first service exceeds the first threshold time (S620).

Meanwhile, the content providing system according to the present disclosure may store content viewing history and play content using different methods based on viewing time of particular content. Referring to FIGS. 1 to 4, the processor 170 may display, on the display 180, a login that has been made using particular login information based on a login success message received from the control server 400 (S160). The processor 170 may receive and store accumulated playback time and a current playback timepoint for first content of the content server 300 (S230). The processor 170 may receive first content at a timepoint subsequent to the current playback timepoint from the content server 300 through the control server 400 and display the received first content on the display 180 (S260).

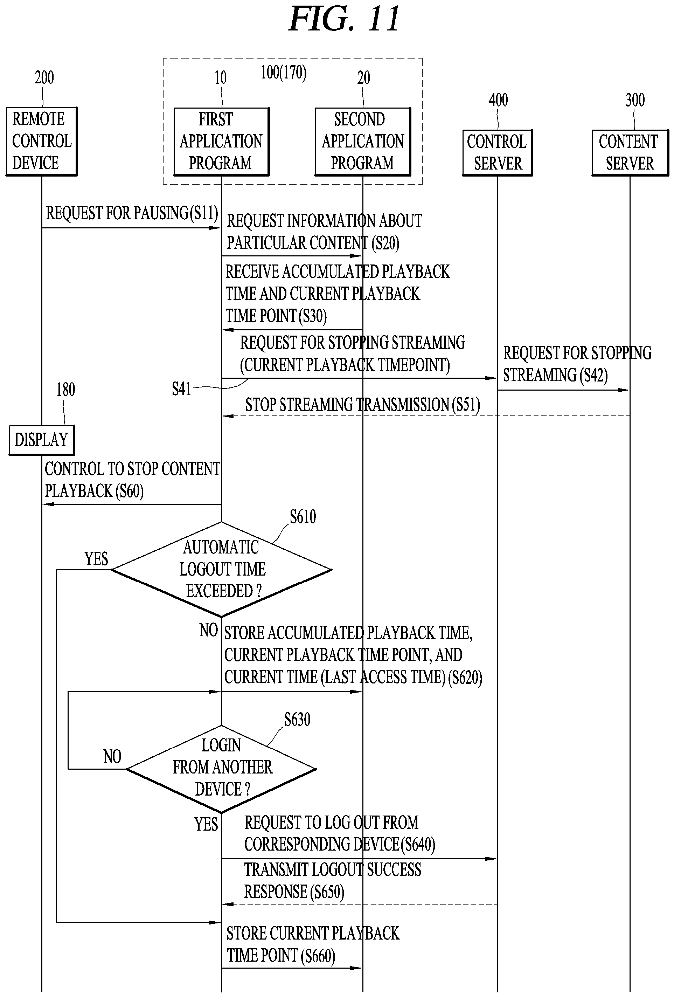

Meanwhile, the content providing system according to the present disclosure may perform controlling using different methods by determining automatic logout time and whether a login has been made from another device, according to a request for pausing playback of content. In this regard, FIG. 11 illustrates a flowchart of a method of performing content control by determining automatic logout time and whether a login has been made from another device according to a request for pausing.

Referring to FIGS. 1 to 11, the processor 170 may receive a request for pausing from the remote control device 200 (S11). Based on the request for pausing, the processor 170 may receive (S20) and store accumulated playback time and a current playback timepoint for first content of the content server 300. The processor 170 may transmit (S41 and S42) a request for stopping streaming of first content at a timepoint subsequent to the current playback timepoint to the content server 300 through the control server 400. Accordingly, streaming transmission from the content server 300 to the display device 100 may be stopped (S51). The processor 170 may control the display 180 to stop playback of the first content (S60).

Meanwhile, in a state in which the playback of the first content is stopped, whether automatic logout time for a first login account of a first user has been exceeded may be determined (S610). In a state in which the playback of the first content is stopped, when automatic logout time for the first login account is not exceeded, the processor 170 may store accumulated playback time, a current playback timepoint, and last access time of the first content. A purchase request and purchase for the first content may be performed in comparison of the accumulated playback time with threshold time associated with a preview. Meanwhile, whether or not to refund the first content may be determined by comparing the accumulated playback time with threshold playback time associated with a refund after purchasing the content.

The processor 170 may also store current time to replace last access time of the first content. Meanwhile, the last access time may be set to time when the first content was played through a plurality of devices and different login accounts. The processor 170 may determine whether a login has been made from other devices with the first login account of the first user and a second login account of a second user (S630).

When the first login account and the second login account are logged into other devices, the processor 170 may control the display device 100 to be logged out. The processor 170 may transmit, to the control server 400, a request for logging out the first login account and the second login account from the display device 100 (S640). In response to the request for the logging out, the processor 170 may receive a logout success response from the control server 400. When the first login account is logged out from the display device 100, management of the accumulated playback time may be performed on another device logged in, e.g., a mobile terminal. Accordingly, the processor 170 may store a current playback timepoint (or last access time) of the first content (S660).

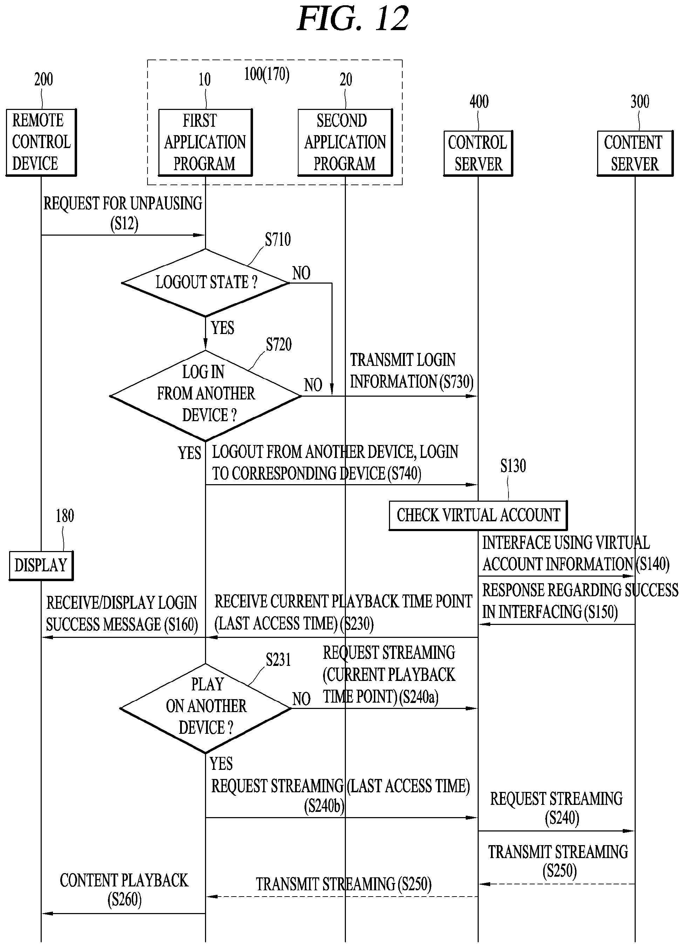

Meanwhile, the content providing system according to the present disclosure may perform controlling using different methods by determining a logout state and whether a login has been made from another device, according to a request for unpausing playback of content. In this regard, FIG. 12 is a flowchart of a method of performing content control by determining a logout state and whether a login has been made from another device according to a request for unpausing.

Referring to FIGS. 1 to 12, the processor 170 may receive a request for unpausing from the remote control device 200 (S12). Based on the request for unpausing, the processor 170 may determine whether a display device is logged out (S710). When the display device is logged out, it may be determined whether another device has been logged in (S720).

Based on the request for unpausing, when a first login account of a first user is in a logged-in state, the processor 170 may transmit login information to the control server 400 (S730). In this regard, when the first login account is not logged out, but logged in to the display device 100, the login information may be transmitted to the control server 400 (S730).

Meanwhile, when the first login account is logged out and logged in to another device, a request (S740) may be made to the control server 400 to log out the first login account from the another device (S740).

The processor 170 may check a virtual account (S130) by interfacing with the control server 400. The processor 170 may receive an interface response by interfacing with the control server 400, the interface response indicating that interfacing with the content server 300 has been successfully established through a login with the checked virtual account. The processor 170 may display, on the display 180, a login that has been performed using particular login information based on a login success message received from the control server 400 (S160). The processor 170 may receive (S230) and store accumulated playback time and a current playback timepoint for first content of the content server 300. The processor 170 may receive first content at a timepoint subsequent to the current playback timepoint from the content server 300 through the control server 400 and display the received first content on the display 180 (S260).

Meanwhile, the processor 170 may determine whether the first content was played on another device (S231). When the first content was not played on another device, the processor 170 may request (S240a) playback of the first content based on the current playback timepoint of the first content stored in a pause state to execute (S260) the playback of the first content. When the first content was played on the another device, playback of the first content may be requested (S240b) based on last access time of the first content stored in the pause state to execute (S260) the playback of the first content.

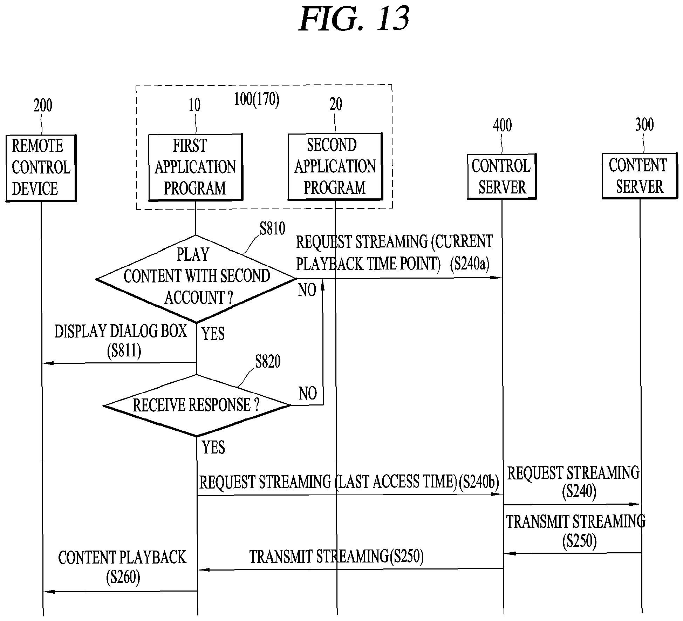

Meanwhile, when playback of content is unpaused, content may be played by taking into account whether playback is being performed by family members. In this regard, FIG. 13 shows a flowchart of a method of performing content control by determining whether content was played with another login account according to a request for unpausing.

Referring to FIGS. 1 to 13, the processor 170 may determine whether first content was played with a second login account of a second user in a family relationship with a first user of a first login account (S810). When the first content was not played with the second login account, the processor 170 may request (S240a) playback of the first content based on current playback timepoint of the first content stored in a pause state to execute (S260) the playback of the first content.

When the first content was played with a second login account, the processor 170 may request a response regarding whether to play the first content based on last access time of the first content stored when the second login account was logged in. The processor 170 may display, on the display 180, a dialog box associated with whether to play the first content based on the last access time of the first content (S811).

The processor 170 may determine whether the response regarding whether to play the first content has been received based on the last access time for the first content (S820). When the response regarding whether to play the first content based on the last access time is received, playback of the first content may be requested based on the last access time of the first content (S240b). Accordingly, the playback of the first content may be performed from a timepoint subsequent to the last access time (S260).

When a request for playing the first content based on the current playback timepoint is received through the dialog box, the processor 170 may request (S240b) playback of the first content based on the current playback timepoint. Additionally, when a response for playing the first content is not received based on the last access time, the processor 170 may request (S240b) playback of the first content based on the current playback timepoint.

A display device configured to interface with a server according to this specification has been described. Technical effects of the display device configured to interface with a server according to this specification may be summarized as below, but are not limited thereto.

According to this specification, a display device configured to interface with a content server using a newly created or existing virtual account may be provided.

According to this specification, a function that allows to purchase and play individual content without membership registration on a server operated separately by a content provider may be supported through a newly created or existing virtual account.

According to this specification, a virtual account may be newly created or an existing virtual account may be used not to provide information about an account of a manufacturer of a display device.

According to this specification, a function that allows to purchase and play individual content through an account of a manufacturer of a display device without membership registration on a server operated separately by a content provider may be supported through a newly created or existing virtual account.

According to this specification, implementation may be performed such that content may be purchased and played through a newly created or existing virtual account using interface information about a virtual account and an account of a manufacturer of a display device without an additional membership registration procedure.

According to this specification, when a login is attempted for first time, an interface response indicating that interfacing with a particular content server has been successfully established through login with a created virtual account may be received.

According to this specification, content may be viewed by interfacing with a plurality of content servers through a control server using a virtual account corresponding to previous login information.

According to this specification, when an account is created for each of a plurality of content providers, integrated management of a plurality of service may be performed through a virtual account.

According to this specification, account integration may be performed through an application provided by a content provider or an application on a screen of a display device.

According to this specification, integration and separation of virtual accounts with family members may be performed while a subscription to a content service is recommended based on a usage frequency.

According to this specification, when playback of content is paused or unpaused, the playback of the content may be controlled by determining whether a login is made from another device.

The present disclosure described above can be implemented as computer-readable codes on a medium having a program recorded thereon. The computer-readable medium includes all kinds of recording devices in which data readable by a computer system is stored. Examples of the computer-readable medium include a hard disk drive (HDD), a solid state disk (SSD), a silicon disk drive (SDD), a ROM, a RAM, a CD-ROM, a magnetic tape, a floppy disk, an optical data storage device and the like, and may also be implemented in the form of a carrier wave (e.g., transmission over the Internet). The computer may include the control unit 180 of the terminal. The above detailed description should not be limitedly construed in all aspects and should be considered as illustrative. The scope of the present disclosure should be determined by reasonable interpretation of the appended claims, and all changes within the scope of equivalents of the present disclosure are included in the scope of the present disclosure.

## Claims

1. A display device (100) configured to interface with a server, the display device (100) comprising:
a user input interface (150) that receives, from a remote control device (200), a request for a login with a particular account for viewing content;
a processor (170) that obtains screen information for viewing the content based on the request for the login with the particular account; and
a display (180) configured to display a particular screen according to the obtained screen information during the login with the particular account,
wherein the processor (170) is configured to:
transmit information about the login to an application program (10) that interfaces with a control server (400);
control the application program (10) to attempt a login with the particular account by interfacing with the control server (400) based on the login information;
determine whether the login is attempted for first time using the login information, by interfacing with the control server (400), and
when the login is attempted for the first time using the login information, receive an interface response indicating that interfacing with a content server (300) has been successfully established through the login using a created virtual account, by interfacing with the control server (400).

2. The display device (100) of claim 1, wherein the processor is configured to:
when a login was attempted previously using the login information, obtain a virtual account corresponding to information about the previous login from the control server (400) by interfacing with the control server (400);
receive an interface response indicating that interfacing with the content server (300) has been successfully established using the obtained virtual account, by interfacing with the control server (400), and wherein the processor is preferably further configured to:
create a first account corresponding to the virtual account by interfacing with the content server (300), in correspondence with a first execution input to a first icon on the display (180); and
create a second account corresponding to the virtual account by interfacing with a second content server (300b), in correspondence with a second execution input to a second icon on the display (180).

3. The display device (100) of claim 2, wherein the processor is configured to receive, through the control server (400), a first notification indicating that a first service account has been created or a second notification indicating that a second service account has been created;
wherein the first service account is created through a first application program (10) corresponding to the content server (300),
the second service account is created through a second application program (20) corresponding to the second content server (300), and
the first service account and the second service account are accounts of a same person as the virtual account.

4. The display device (100) of claim 3, wherein the processor is configured to:
transmit a first request requesting to integrate the first service account or the second service account into the virtual account to a mobile terminal (500) that has requested the creating of the first service account through the control server (400);
transmit, to the mobile terminal (500), a message indicating that integrated management of a plurality of services is available through the virtual account, when the first service account or the second service account is integrated into the virtual account; and
control the control server (400) to integrate the first service account or the second service account into the virtual account, when a first response accepting the first request is received from the mobile terminal (500).

5. The display device (100) of claim 3, wherein the processor is configured to:
determine whether the first service account or the second service account of a same person as the created virtual account is present, when the login is attempted for the first time using the login information;
determine whether the first service account or the second service account of a same person as the obtained virtual account is present, when a login was attempted previously using the login information; and
display, on the display, a second request requesting to integrate the first service account or the second service account into the virtual account, when the first service account or the second service account of the same person is present.

6. The display device (100) of claim 5, wherein the processor is configured to:
display, on the display (180), a message indicating that integrated management of a plurality of services is available through the virtual account, when the first account or the second account is integrated into the virtual account; and
control the control server (400) to integrate the first service account into the first account, when a second response accepting the second request is received from the display (180) or the remote control device (200) wirelessly connected to the display device (100).

7. The display device (100) of any one of claims 2 to 6, wherein the processor is configured to:
determine whether first usage time of the first service through the first account exceeds first threshold time;
determine whether second usage time of a second service through the second account exceeds second threshold time;
transmit information about usage time of the first service and the second service to the control server (400), when the first usage time exceeds the first threshold time and the second usage time exceeds the second threshold time; and
displays, on the display (180), a subscription request message for an integrated subscription service for the first service and the second service by interfacing with the control server (400).

8. The display device (100) of any one of claims 2 to 7, wherein the processor is configured to:
when a relationship between a first user and a second user among a plurality of users is set as a family, control the control server (400) to map a first login account of the first user and a second login account of the second user to a same virtual account; and
control the control server (400) to map the second login account to a second virtual account, when the first login account is in a logged-out state and the second login account is in a logged-in state, the first login account being a representative account among login accounts including the first login account and the second login account.

9. The display device (100) of claim 8, wherein the processor is configured to:
in a state of being mapped to the same virtual account, when a login is performed with the second login account that was previously logged in, obtain the virtual account from the control server (400);
when the first login account is in a logged-out state and a login is performed first with the second login account, create a second virtual account and receive an interface response indicating that interfacing with a particular content server (300) has been successfully established through a login with the created second virtual account, by interfacing with the control server (400), and wherein the processor is preferably further configured to:
determine whether a sum of first usage time of a first service from the content server (300) through the first login account and the second login account exceeds first threshold time; and
determine whether a sum of second usage time of a second service through the first login account and the second login account exceeds second threshold time.

10. The display device (100) of claim 9, wherein the processor is configured to:
transmit, to the control server (400), an integrated subscription request message with respect to the first service for the first user and the second user when the sum of the first usage time exceeds the first threshold time;
transmit, to the control server (400), an integrated subscription request message with respect to the second service for the first user and the second user when the sum of the second usage time exceeds the second threshold time; and
transmit, to the control server (400), an integrated subscription request message with respect to the first service and the second service for the first user and the second user, when the sum of the first usage time exceeds the first threshold time and the sum of the second usage time exceeds the second threshold time.

11. The display device (100) of claim 8, wherein the processor is configured to:
display, on the display (180), a login that has been made using the login information based on a login success message received from the control server (400);
store accumulated playback time and a current playback timepoint for first content of the content server (300); and
receive the first content from a timepoint subsequent to the current playback timepoint from the content server (300) through the control server (400) and display the received first content on the display (180).

12. The display device (100) of claim 11, wherein the processor is configured to:
store the accumulated playback time and the current playback timepoint for the first content of the content server (300), based on a pausing request by the remote control device (200);
transmit a request for stopping streaming of the first content at the timepoint subsequent to the current playback timepoint to the content server (300) through the control server (400);
determine whether automatic logout time of the first login account has been exceeded in a state when playback of the first content is stopped, and wherein the processor is preferably further configured to:
store the accumulated playback time, the current playback timepoint, and last access time of the first content when the automatic logout time of the first login account is not exceeded in a state in which the playback of the first content is stopped, wherein the last access time is time when the first content was played through a plurality of devices and other login accounts;
transmit, to the control server (400), a request for logging the first login account and the second login account out from the display device (100) when a login is made from another device using the first login account and the second login account; and
store a current playback timepoint of the first content when the first login account is logged out from the display device (100).

13. The display device (100) of claim 12, wherein the processor is configured to:
when an unpausing request is received from the remote control device (200) and the first login account is in a logged-in state, transmit the login information to the control server (400);
when an unpausing request is received from the remote control device (200) and the first login account is logged out and logged in to another device, cause the first login account to be logged out from the another device; and
check the virtual account by interfacing with the control server (400), and receive an interface response indicating that interfacing with the content server (300) has been successfully established through a login using the checked virtual account, by interfacing with the control server (400).

14. The display device (100) of claim 13, wherein the processor is configured to:
when the first content has not been played on the another device, perform playback of the first content based on the stored current playback timepoint of the first content in a paused state; and
when the first content has been played on the another device, perform playback of the first content based on the stored last access time of the first content in the paused state.

15. The display device (100) of claim 13, wherein the processor is configured to:
determine whether the first content was played with the second login account of the second user who is in a family relationship with the first user of the first login account,
when the first content was not played with the second login account, perform playback of the first content based on the stored current playback timepoint of the first content in a paused state;
when the first content was played with the second login account, display, on the display (180), a dialog box associated with whether to perform playback of the first content based on stored last access time for the first content, the last access time being stored when the second login account was logged in; and
when a response of playing the first content is received based on the last access time, perform playback of the first content based on the stored last access time of the first content when the second login account was logged in.

## Amended claims

### Amended claims in accordance with Rule 137(2) EPC.

1. A display device (100) configured to interface with a server, the display device (100) comprising:
a user input interface (150) configured to receive, from a remote control device (200), a request for a login with a particular account for viewing content;
a processor (170) configured to obtain screen information for viewing the content based on the request for the login with the particular account; and
a display (180) configured to display a particular screen according to the obtained screen information during the login with the particular account,
wherein the processor (170) is configured to:
transmit information about the login to an application program (10) that interfaces with a control server (400);
control the application program (10) to attempt a login with the particular account by interfacing with the control server (400) based on the login information;
determine whether the login is attempted for first time using the login information, by interfacing with the control server (400), and
when the login is attempted for the first time using the login information, receive an interface response indicating that interfacing with a content server (300) has been successfully established through the login using a created virtual account, by interfacing with the control server (400), wherein the creating the virtual account comprises transmitting, by the processor (170) to the content server (300), an account creation request for creating the virtual account.

2. The display device (100) of claim 1, wherein the processor is configured to:
when a login was attempted previously using the login information, obtain a virtual account corresponding to information about the previous login from the control server (400) by interfacing with the control server (400);
receive an interface response indicating that interfacing with the content server (300) has been successfully established using the obtained virtual account, by interfacing with the control server (400), and wherein the processor is preferably further configured to:
create a first account corresponding to the virtual account by interfacing with the content server (300), in correspondence with a first execution input to a first icon on the display (180); and
create a second account corresponding to the virtual account by interfacing with a second content server (300b), in correspondence with a second execution input to a second icon on the display (180).

3. The display device (100) of claim 2, wherein the processor is configured to receive, through the control server (400), a first notification indicating that a first service account has been created or a second notification indicating that a second service account has been created;
wherein the first service account is created through a first application program (10) corresponding to the content server (300),
the second service account is created through a second application program (20) corresponding to the second content server (300), and
the first service account and the second service account are accounts of a same person as the virtual account.

4. The display device (100) of claim 3, wherein the processor is configured to:
transmit a first request requesting to integrate the first service account or the second service account into the virtual account to a mobile terminal (500) that has requested the creating of the first service account through the control server (400);
transmit, to the mobile terminal (500), a message indicating that integrated management of a plurality of services is available through the virtual account, when the first service account or the second service account is integrated into the virtual account; and
control the control server (400) to integrate the first service account or the second service account into the virtual account, when a first response accepting the first request is received from the mobile terminal (500).

5. The display device (100) of claim 3, wherein the processor is configured to:
determine whether the first service account or the second service account of a same person as the created virtual account is present, when the login is attempted for the first time using the login information;
determine whether the first service account or the second service account of a same person as the obtained virtual account is present, when a login was attempted previously using the login information; and
display, on the display, a second request requesting to integrate the first service account or the second service account into the virtual account, when the first service account or the second service account of the same person is present.

6. The display device (100) of claim 5, wherein the processor is configured to:
display, on the display (180), a message indicating that integrated management of a plurality of services is available through the virtual account, when the first account or the second account is integrated into the virtual account; and
control the control server (400) to integrate the first service account into the first account, when a second response accepting the second request is received from the display (180) or the remote control device (200) wirelessly connected to the display device (100).

7. The display device (100) of any one of claims 2 to 6, wherein the processor is configured to:
determine whether first usage time of the first service through the first account exceeds first threshold time;
determine whether second usage time of a second service through the second account exceeds second threshold time;
transmit information about usage time of the first service and the second service to the control server (400), when the first usage time exceeds the first threshold time and the second usage time exceeds the second threshold time; and
displays, on the display (180), a subscription request message for an integrated subscription service for the first service and the second service by interfacing with the control server (400).

8. The display device (100) of any one of claims 2 to 7, wherein the processor is configured to:
when a relationship between a first user and a second user among a plurality of users is set as a family, control the control server (400) to map a first login account of the first user and a second login account of the second user to a same virtual account; and
control the control server (400) to map the second login account to a second virtual account, when the first login account is in a logged-out state and the second login account is in a logged-in state, the first login account being a representative account among login accounts including the first login account and the second login account.

9. The display device (100) of claim 8, wherein the processor is configured to:
in a state of being mapped to the same virtual account, when a login is performed with the second login account that was previously logged in, obtain the virtual account from the control server (400);
when the first login account is in a logged-out state and a login is performed first with the second login account, create a second virtual account and receive an interface response indicating that interfacing with a particular content server (300) has been successfully established through a login with the created second virtual account, by interfacing with the control server (400), and wherein the processor is preferably further configured to:
determine whether a sum of first usage time of a first service from the content server (300) through the first login account and the second login account exceeds first threshold time; and
determine whether a sum of second usage time of a second service through the first login account and the second login account exceeds second threshold time.

10. The display device (100) of claim 9, wherein the processor is configured to:
transmit, to the control server (400), an integrated subscription request message with respect to the first service for the first user and the second user when the sum of the first usage time exceeds the first threshold time;
transmit, to the control server (400), an integrated subscription request message with respect to the second service for the first user and the second user when the sum of the second usage time exceeds the second threshold time; and
transmit, to the control server (400), an integrated subscription request message with respect to the first service and the second service for the first user and the second user, when the sum of the first usage time exceeds the first threshold time and the sum of the second usage time exceeds the second threshold time.

11. The display device (100) of claim 8, wherein the processor is configured to:
display, on the display (180), a login that has been made using the login information based on a login success message received from the control server (400);
store accumulated playback time and a current playback timepoint for first content of the content server (300); and
receive the first content from a timepoint subsequent to the current playback timepoint from the content server (300) through the control server (400) and display the received first content on the display (180).

12. The display device (100) of claim 11, wherein the processor is configured to:
store the accumulated playback time and the current playback timepoint for the first content of the content server (300), based on a pausing request by the remote control device (200);
transmit a request for stopping streaming of the first content at the timepoint subsequent to the current playback timepoint to the content server (300) through the control server (400);
determine whether automatic logout time of the first login account has been exceeded in a state when playback of the first content is stopped, and wherein the processor is preferably further configured to:
store the accumulated playback time, the current playback timepoint, and last access time of the first content when the automatic logout time of the first login account is not exceeded in a state in which the playback of the first content is stopped, wherein the last access time is time when the first content was played through a plurality of devices and other login accounts;
transmit, to the control server (400), a request for logging the first login account and the second login account out from the display device (100) when a login is made from another device using the first login account and the second login account; and
store a current playback timepoint of the first content when the first login account is logged out from the display device (100).

13. The display device (100) of claim 12, wherein the processor is configured to:
when an unpausing request is received from the remote control device (200) and the first login account is in a logged-in state, transmit the login information to the control server (400);
when an unpausing request is received from the remote control device (200) and the first login account is logged out and logged in to another device, cause the first login account to be logged out from the another device; and
check the virtual account by interfacing with the control server (400), and receive an interface response indicating that interfacing with the content server (300) has been successfully established through a login using the checked virtual account, by interfacing with the control server (400).

14. The display device (100) of claim 13, wherein the processor is configured to:
when the first content has not been played on the another device, perform playback of the first content based on the stored current playback timepoint of the first content in a paused state; and
when the first content has been played on the another device, perform playback of the first content based on the stored last access time of the first content in the paused state.

15. The display device (100) of claim 13, wherein the processor is configured to:
determine whether the first content was played with the second login account of the second user who is in a family relationship with the first user of the first login account;
when the first content was not played with the second login account, perform playback of the first content based on the stored current playback timepoint of the first content in a paused state;
when the first content was played with the second login account, display, on the display (180), a dialog box associated with whether to perform playback of the first content based on stored last access time for the first content, the last access time being stored when the second login account was logged in; and
when a response of playing the first content is received based on the last access time, perform playback of the first content based on the stored last access time of the first content when the second login account was logged in.
